Europäisches Patentamt

European Patent Office

Office européen des brevets

(11) Veröffentlichungsnummer: **0 288 828 B1**

## (12) EUROPÄISCHE PATENTSCHRIFT

(45) Veröffentlichungstag der Patentschrift: **01.07.92**

(51) Int. Cl.⁵: **B23K 35/368**, B23K 35/362

(21) Anmeldenummer: **88105958.8**

(22) Anmeldetag: **14.04.88**

(54) **Halogenfreies Flussmittelgemisch und seine Verwendung.**

(30) Priorität: **23.04.87 DE 3713553**

(43) Veröffentlichungstag der Anmeldung:
**02.11.88 Patentblatt 88/44**

(45) Bekanntmachung des Hinweises auf die
Patenterteilung:
**01.07.92 Patentblatt 92/27**

(84) Benannte Vertragsstaaten:
**AT BE CH DE ES FR GB GR IT LI LU NL SE**

(56) Entgegenhaltungen:
**CH-A- 653 939**
**DE-A- 2 828 197**
**DE-A- 2 921 827**
**DE-A- 3 205 315**

(73) Patentinhaber: **alpha grillo-lötsysteme GmbH**
**Buschstrasse 95 Postfach 11 01 26**
**W-4100 Duisburg 11(DE)**

(72) Erfinder: **Froebel, Gerd, Dipl.-Ing.**
**Sengelsweg 29**
**W-4000 Düsseldorf 31(DE)**
Erfinder: **Stang, Hans W.**
**Droste-Hülshoff-Strasse 18**
**W-4100 Duisburg 11(DE)**

(74) Vertreter: **Werner, Hans-Karsten, Dr. et al**
**Deichmannhaus am Hauptbahnhof**
**W-5000 Köln 1(DE)**

## Beschreibung

Gegenstand der vorliegenden Erfindung ist ein halogenfreies und amingruppenfreies Flußmittelgemisch für Lötdrähte mit einer oder mehreren Flußmittelseelen auf Basis von natürlichen und/oder synthetischen Harzen, organischen Säuren und gegebenenfalls weiteren Zusätzen sowie seine Verwendung für spezielle Lötdrähte mit einer oder mehreren Flußmittelseelen.

Zur Lötung in der Elektronik und Mikro-Elektronik werden bereits Lötdrähte mit einer oder mehreren Flußmittelseelen auf Basis von natürlichen und/oder synthetischen Harzen, organischen Säuren und gegebenenfalls weiteren Zusätzen verwendet. In einigen dieser Drähte sind die Harze aktiviert mit Aminhydrochloriden gemäß der Gruppe F-SW 26 oder mit Carbonsäuren gemäß der Gruppe F-SW 32 DIN 8511. Der Anteil der Aktivatoren beträgt dabei maximal 10 Gew.-%. Der Rest ist Harz. Die Flußmittelseele in dem Lötdraht beträgt meist 1,5 bis 4,5 Gew.-%, wobei Drähte mit einer durchgehenden Längsseele meist einen Flußmittelgehalt im oberen Grenzbereich aufweisen. Niedrigere Gehalte an Flußmittelgemisch werden bisher nur erreicht durch nachträglich von außen gelochte Drähte, deren Löcher anschließend mit Flußmittel gefüllt werden (vgl. "Weichlöten in der Elektronik", Fachverlag Schiele & Schön GmbH, Berlin, 1967, Seite 38).

Aus der DE-AS 28 20 656 sind halogenhaltige Lötflußmittel bekannt, die in Form eines Feststoffes, einer Paste, einer Flüssigkeit, eines Schaumflußmittels oder einer Flußmittelseele anwendbar sind. In Spalte 11, Zeilen 47 bis 64 wird behauptet, daß diese Gemische auch zur Herstellung einer Flußmittelseele geeignet sind, die 0,5 bis 5 Gew.-% des Gesamtgewichtes des Lot-Drahtes ausmachen. Ein Beispiel für eine derartige Flußmittelseele liegt nicht vor. Eigene Untersuchungen der Anmelderin haben ergeben, daß mindestens 2 bis 3 Gew.-% derartiger Gemische notwendig sind, um brauchbare Flußmittelseelen zu liefern, die jedoch obendrein noch halogenhaltig sind.

In den deutschen Offenlegungsschriften 28 28 197 und 29 21 827 sind halogenfreie Flußmittel für die Weichlötung auf Kolophoniumbasis beschrieben, die als Aktivator Diethanolamin enthalten und insbesondere in Form eines Schaumes oder durch Aufsprühen zur Anwendung kommen sollen. Sämtliche Beispiele enthalten daher auch einen relativ hohen Anteil an Lösungsmittel wie Isopropanol. Nur in Beispiel 1 der DE-OS 29 21 827 ist ein Festflußmittel beschrieben, das als Lötdrahtfüllung oder Lötdrahtummantelung zur Anwendung gekommen ist. Es fehlt in diesem Beispiel jedoch die Mengenangabe. Nach den Untersuchungen der Anmelderin sind von derartigen Mitteln mindestens 2 bis 3 Gew.-% notwendig, um ausreichend wirksam zu sein. Aufgrund des hohen Gehaltes an Kolophonium handelt es sich somit aber nicht um rückstandsarme Flußmittel, bei denen auf eine Nachreinigung verzichtet werden kann.

Aus der DE-OS 32 05 315 sind Flußmittel zur Verwendung beim Weichlöten bekannt, die als Lösung im Isopropanol vorliegen und nach den Erfahrungen der Anmelderin auch ohne Zusatz von Isopropanol nicht geeignet sind zur Füllung einer Flußmittelseele, wenn diese weniger als 1 Gew.-% des Lötdrahtes ausmacht.

Aus der WO 85/05307 ist ein reinigbares Weichlötflußmittel bekannt, welches als wesentlichen Bestandteil mindestens eine alicyclische Mono- Di- oder Policarbonsäure mit mindestens einem Kohlenstoffring oder deren Derivaten enthält. In Beispiel 4 ist ein Festflußmittel zur Umhüllung eines Lotformteiles oder als Füllung für Lotdrähte beschrieben, jedoch ohne Angabe der notwendigen Menge dieses Festflußmittels, bezogen auf das Gewicht des Lotdrahtes. Aus den Untersuchungen der Anmelderin geht hervor, daß auch von diesen Festflußmitteln mindestens 2 bis 3 Gew.-% notwendig sind, um zu brauchbaren Ergebnissen zu kommen. Der hohe Gehalt an hydriertem Baumharz macht es erforderlich, überschüssiges Flußmittel abzuwaschen.

Im allgemeinen stören Flußmittelrückstände die elektrische Funktion von gedrückten Schaltungen nicht. Aufgrund der zunehmenden Adaptierungstechnik zur automatischen Funktionsprüfung sind sie jedoch unerwünscht, da sie isolierend wirken und deshalb die Kontaktierung stören. Die Rückstände des Flußmittels müssen deshalb abgewaschen werden. Dies erfordert jedoch zusätzlichen Aufwand und wird aufgrund der zunehmenden Auflagen gegen die Emission von Chlorkohlenwasserstoffen und Fluorkohlenwasserstoffen als Reinigern immer schwieriger. Bei der Lötung von oberflächenmontierten Bauteilen (SMT - Surface Mounted Technology) ist eine nachträgliche Reinigung überdies nicht sinnvoll, weil die Abstände zwischen den Bauteilen und der Leiterplatte so klein sind, daß eine optimale Reinigung nicht mehr möglich ist. Überdies birgt eine nachträgliche Reinigung die Gefahr in sich, daß das Harz ausgewaschen wird und die Aktivatoren, von der Isolationswirkung des Harzes befreit, leitfähig werden. Für die automatische Lötung von Leiterplatten (MELF- und SMDbestückt) auf Wellenlötanlagen werden daher bereits jetzt extrem rückstandsarme Flußmittel in flüssiger Form gefordert, die keine störenden Rückstände hinterlassen. Speziell für die SMT-Lötung wirken sich diese Flußmittel auch löttechnisch positiv aus.

Zur Ergänzung der rückstandsarmen Flußmittel in flüssiger Form wird von der Praxis in zunehmendem Maße ein Lötdraht zur Nachlötung und Nachbestückung von Bauteilen gefordert, der in gleicher Weise möglichst keine oder geringe Flußmittelrückstände hinterläßt.

Die Erfindung hat sich die Aufgabe gestellt, ein derartiges halogenfreies Flußmittelgemisch für Lötdrähte mit einer oder mehreren Flußmittelseelen zu entwickeln, welches diesen neuen und erhöhten Anforderungen gewachsen ist. Da für diese Techniken nur halogenfreie Flußmittel in Frage kommen, handelt es sich dabei ausschließlich um Flußmittelgemische auf Basis von natürlichen und/oder synthetischen Harzen, organischen Säuren und gegebenenfalls weiteren Zusätzen, die halogenfrei und amingruppenfrei sein sollen.

Die Aufgabe konnte überraschenderweise dadurch gelöst werden, daß

a) der Gehalt an Harz 20 bis 80 Gew.-% beträgt,

b) mindestens 2 organische Säuren im Verhältnis 1:5 bis 5:1 vorhanden sind und

c) das Gesamtgemisch eine Säurezahl von mindestens 200 aufweist.

Vorzugsweise beträgt der Gehalt an Harz 40 bis 75 Gew.-%. Als natürliches Harz kommt vor allem Kolophonium in Frage. Als synthetische Harze kommen modifiziertes Kolophonium und vollsynthetische Harze in Frage. Als organische Säuren kommen insbesondere die üblicherweise als Aktivatoren verwendbaren Säuren mit 4 bis 12 Kohlenstoffatomen in Frage. Besonders bewährt hat sich bisher ein Gemisch aus Adipinsäure und Korksäure im Verhältnis 7:3 bis 1:1.

Als weitere Zusätze haben sich Weichmacher bewährt, welche sich unter den Bedingungen des Lötens nicht zersetzen. Bewährt hat sich inbesondere Sebacinsäure-bis-2-Ethylhexylester in Mengen bis zu 10 Gew.-%. Als weitere Zusätze sind insbesondere Zinnsalze von organischen Säuren geeignet. Vorzugsweise werden diese in Mengen bis zu 3% zugesetzt, vorzugsweise in Mengen von 0,2 bis 2,0%.

Schließlich ist es erforderlich, daß das Gesamtgemisch eine Säurezahl von mindestens 200 aufweist, um noch ausreichend aktiv zu sein. Trotz dieser hohen Säurezahl sind die erfindungsgemäßen Flußmittelgemische nicht korrosiv, anscheinend, weil eine ausreichende Menge Harz vorhanden ist.

Überraschenderweise ist es möglich, mit Hilfe dieses neuen Flußmittelgemisches Lötdrähte mit einer Flußmittelseele unter 1 Gew.-% herzustellen. Trotz dieses wesentlich geringeren Anteils an Flußmittelgemisch in dem Lötdraht mit einer oder mehreren Flußmittelseelen ist dieser geringe Anteil von 0,2 bis 1 weniger als Gew.-% an Flußmittelgemisch völlig ausreichend, eine gute und zuverlässige Lötung zu gewährleisten und dennoch keine unerwünschten Rückstände an Flußmittel zu hinterlassen. Gewünschtenfalls können zwar mit Hilfe dieses Flußmittelgemisches auch Lötdrähte mit höherem Gehalt an Flußmittel hergestellt werden, jedoch reicht bereits dieser niedrige Gehalt an Flußmittelgemisch völlig aus. Durch den geringeren Gehalt an Flußmittelgemisch im Lötdraht wird auch die Rauchentwicklung gegenüber herkömmlichen Lötdrähten erheblich verringert und damit auch die Belastung des Personals bei der Verarbeitung. Es entstehen weiterhin keine unerwünschten Crackprodukte während der Verarbeitung an den Lötkolbenspitzen, so daß hiermit rasch und störungsfrei gearbeitet werden kann. Bei der Nachlötung von SMT-Baugruppen ist keine Nachreinigung der Lötstellen notwendig, um die automatische Funktionsprüfung durchführen zu können. Die gute Benetzung gewahrleistet eine einwandfreie Lötung auch bei den äußerst kleinen SMT-Kontaktflächen.

Das erfindungsgemäße Flußmittelgemisch kann vorzugsweise in die Lötdrähte in Form einer zentralen Seele aus Flußmittel eingebracht werden. Es ist jedenfalls nicht notwendig, Lötdrähte mit mehreren aufwendigeren Flußmittelseelen herzustellen, wie sie insbesondere entwickelt wurden, um die Nachteile bisheriger Flußmittel im Lötdraht zu vermindern.

Eine besonders bevorzugte Ausführungsform des erfindungsgemäßen Flußmittels, welches alle an sie gestellten Anforderungen optimal erfüllt, besteht aus 20 bis 26 Gew.-% Adipinsäure, 11 bis 15 Gew.-% Korksäure, 3 bis 7 Gew.-% Sebacinsäurebis-2-Ethylhexylester, 0,5 bis 1,5 Gew.-% Zinnstearat und/oder Zinnadipinat und zu den restlichen Prozenten aus Harz, vorzugsweise Kolophonium. Mit diesem Flußmittelgemisch können Lötdrähte mit einer Flußmittelseele von 0,2 bis 0,8 Gew.-% hergestellt werden und beispielsweise zur Lötung von SMT-Bauteilen eingesetzt werden, ohne daß eine Nachreinigung nötig ist oder sonstige Störungen beobachtet werden.

**Patentansprüche**

1. Halogenfreies und amingruppenfreies Flußmittelgemisch für Lötdrähte mit einer oder mehreren Flußmittelseelen auf Basis von natürlichen und/oder synthetischen Harzen, organischen Säuren und gegebenenfalls weiteren Zusätzen, dadurch gekennzeichnet, daß

a) der Gehalt an Harz 20 bis 80 Gew.-% beträgt,

b) mindestens 2 organische Säuren im Verhältnis 1:5 bis 5:1 vorhanden sind und

c) das Gesamtgemisch eine Säurezahl von mindestens 200 aufweist.

2. Halogenfreies und amingruppenfreies Flußmittelgemisch gemäß Anspruch 1, dadurch ge

kennzeichnet, daß der Gehalt an Harz 40 bis 75 Gew.-% beträgt.

3. Halogenfreies und amingruppenfreies Flußmittelgemisch gemäß Anspruch 1 oder 2, dadurch gekennzeichnet, daß ein Gemisch aus Adipinsäure und Korksäure im Verhältnis 7:3 bis 1:1 vorliegt.

4. Halogenfreies und amingruppenfreies Flußmittelgemisch gemäß einem der Ansprüche 1 bis 3, dadurch gekennzeichnet, daß als weitere Zusätze Weichmacher und/oder Zinnsalze organischer Säuren vorliegen.

5. Verwendung der halogenfreien und amingruppenfreien Flußmittelgemische gemäß Ansprüchen 1 bis 4 für Lötdrähte mit einer Flußmittelseele von 0,2 bis weniger als 1 Gew.-%.

## Claims

1. A halogen-free and amine group-free flux mixture for solder wires having one flux core or a plurality of flux cores based on natural and/or synthetic resins, organic acids, and optionally further additives, characterized in that
   a) the resin content is from 20 to 80% by weight;
   b) at least 2 organic acids are present in a ratio of from 1:5 to 5:1; and
   c) the total mixture has an acid value of at least 200.

2. The halogen-free and amine group-free flux mixture according to claim 1, characterized in that the resin content is from 40 to 75% by weight.

3. The halogen-free and amine group-free flux mixture according to claim 1 or 2, characterized in that a mixture is present of adipic acid and suberic acid in a ratio of from 7:3 to 1:1.

4. The halogen-free and amine group-free flux mixture according to any of claims 1 to 3, characterized in that plasticizers and/or tin salts of organic acids are present as further additives.

5. Use of the halogen-free and amine group-free flux mixture according to claims 1 to 4 for solder wires having a flux core of from 0.2 to less than 1% by weight.

## Revendications

1. Mélange de flux exempt d'halogène et de groupes amino pour des fils de brasage comportant une ou plusieurs âmes de flux à base de résines naturelles et/ou synthétiques, d'acides organiques et éventuellement d'autres additifs, caractérisé en ce que :
   a) la teneur en résine est de 20 à 80 % en poids,
   b) il contient au moins 2 acides organiques à un rapport de 1:5 à 5:1, et
   c) l'ensemble du mélange a un indice d'acidité d'au moins 200.

2. Mélange de flux exempt d'halogène et de groupes amino selon la revendication 1, caractérisé en ce que la teneur en résine est de 40 à 75 % en poids.

3. Mélange de flux exempt d'halogène et de groupes amino selon la revendication 1 ou 2, caractérisé en ce qu'il contient un mélange d'acide adipique et d'acide subérique à un rapport de 7:3 à 1:1.

4. Mélange de flux exempt d'halogène et de groupes amino selon l'une des revendications 1 à 3, caractérisé en ce qu'il contient des plastifiants et/ou des sels d'étain d'acides organiques comme additifs supplémentaires.

5. Utilisation des mélanges de flux exempts d'halogène et de groupes amino selon l'une des revendications 1 à 4, pour des fils de brasage comportant une âme de flux de 0,2 à moins de 1 % en poids.